Europäisches Patentamt

(19) European Patent Office (11) Numéro de publication : **0 086 171**

Office européen des brevets **B1**

(12) **FASCICULE DE BREVET EUROPÉEN**

(45) Date de publication du fascicule du brevet :
03.12.86

(51) Int. Cl.⁴ : **A 01 D 34/77**

(21) Numéro de dépôt : **83440011.1**

(22) Date de dépôt : **07.02.83**

(54) Faucheuse rotative avec arbre de transmission perfectionné et procédé de réalisation de cet arbre.

(30) Priorité : **08.02.82 FR 8202131**

(43) Date de publication de la demande :
**17.08.83 Bulletin 83/33**

(45) Mention de la délivrance du brevet :
**03.12.86 Bulletin 86/49**

(84) Etats contractants désignés :
**AT DE FR GB IT NL**

(56) Documents cités :
**FR-A- 1 206 282**
**FR-A- 2 268 453**
**FR-A- 2 351 578**
**FR-A- 2 391 635**
**US-A- 3 194 083**
**US-A- 3 708 966**

(73) Titulaire : **KUHN S.A.**
**4, Impasse des Fabriques**
**F-67700 Saverne (FR)**

(72) Inventeur : **Toilie, Alain**
**34, Rue Baldner**
**F-67100 Strasbourg (FR)**
Inventeur : **Wolff, Michel**
**20, Rue Principale Kleingoeft**
**F-67440 Marmoutier (FR)**

## Description

La présente invention concerne les faucheuses comportant un ou plusieurs organes rotatifs munis d'au moins un outil de coupe et liés en rotation à des arbres dirigés vers le haut, une partie au moins desdits organes rotatifs étant liés en rotation à un arbre de transmission au moyen de couples de roues d'entraînement dont une roue est munie d'un élément comportant un profil complémentaire du profil de l'arbre de transmission, et qui transmettent ainsi le mouvement entre l'arbre de transmission et les arbres dirigés vers le haut correspondants, ledit arbre de transmission s'étendant sous les organes rotatifs et étant entraîné par un organe d'entraînement tel qu'un ensemble roue-pignon par exemple, ledit ensemble ayant également une partie à profil complémentaire du profil de l'arbre de transmission.

Dans la demande de brevet FR-A-2 351 578, il est connu de réaliser de telles faucheuses dont chaque organe rotatif est guidé en rotation dans un boîtier étanche dans lequel sont logées les roues d'entraînement réalisées sous forme de roues dentées qui transmettent le mouvement entre l'arbre de transmission et l'arbre dirigé vers le haut correspondant.

Dans le but de pouvoir transmettre le mouvement aux arbres dirigés vers le haut par l'intermédiaire des roues dentées, ledit arbre de transmission est réalisé à l'aide d'une barre à section transversale hexagonale constante. Cet arbre de transmission est lié en rotation à l'une des roues dentées contenues dans les différents boîtiers qu'il traverse, dans la mesure où l'alésage de ces roues dentées possède un profil qui est le conjugué de celui de l'arbre de transmission.

Avec un tel agencement il arrive fréquemment que les parties de l'arbre de transmission situées entre les roues dentées avec lesquelles cet arbre est lié en rotation, s'oxydent de telle sorte que la couche d'oxyde qui s'y forme, augmente sensiblement la dimension nominale de la section transversale desdites parties de l'arbre de transmission d'une valeur telle que tout démontage de cet arbre de transmission des boîtiers devienne une opération fastidieuse, voire pratiquement impossible.

Par ailleurs, il arrive fréquemment pendant le travail de la faucheuse que l'un ou l'autre des organes rotatifs soit plus ou moins freiné dans sa rotation par un obstacle quelconque qui se trouve dans le champ. Si l'intensité de ces freinages est trop importante ou si un organe rotatif est bloqué, l'arbre de transmission peut subir une déformation en torsion permanente.

Dans ce cas aussi, si la déformation permanente de l'arbre est trop importante, tout démontage dudit arbre de transmission lors d'une réparation est une opération fastidieuse.

Ce démontage devient d'autant plus difficile voire impossible que les deux phénomènes décrits ci-dessus se retrouvent sur le même arbre de transmission.

Il existe également des faucheuses dont l'arbre de transmission et les roues d'entraînement transmettant le mouvement entre ce dernier et les arbres dirigés vers le haut tournent dans un lubrifiant. Dans ce cas, le phénomène d'oxydation est sensiblement éliminé, mais il subsiste le risque que l'arbre de transmission subisse une déformation en torsion permanente et soit donc également très difficile ou impossible à démonter.

Dans la demande de brevet FR-A-2 391 635, il est connu de réaliser un arbre de transmission possédant uniquement des cannelures dans les zones où l'arbre de transmission est lié en rotation aux roues d'entraînement réalisées sous forme de roues dentées, les parties situées entre ces cannelures étant cylindriques et le diamètre plus faible que celui desdites cannelures.

Cet arbre de transmission possède divers inconvénients. Un premier inconvénient réside dans son prix de revient très élevé à cause des difficultés que l'on rencontre lors de son usinage. En effet, pour réaliser cet arbre de transmission, un important usinage mécanique est nécessaire dans la mesure où il faut par exemple partir d'une barre de section ronde, puis diminuer le diamètre des sections aux endroits où l'arbre de transmission n'est pas lié aux roues dentées, cette opération nécessitant un tournage vu la hauteur des cannelures qui sont à usiner ultérieurement, et une rectification pour éliminer les stries d'usinage génératrices d'amorces de rupture, et enfin usiner lesdites cannelures. Ces usinages sont d'autant plus fastidieux que cet arbre de transmission a en général une longueur relativement importante par rapport à sa section.

Cet arbre de transmission possède un autre grand inconvénient qui apparaît lors de son montage ou de son démontage. En effet, pour monter celui-ci, il faut faire passer la première zone cannelée par la première roue dentée. On continue ensuite à enfiler l'arbre de transmission de sorte que la première zone cannelée se désolidarise à nouveau de la première roue dentée qui peut alors tourner puisqu'entre la première et la seconde zone cannelée, la section de l'arbre est circulaire et de diamètre plus faible. Dans ce cas, lorsque la première zone cannelée arrive en contact avec la seconde roue dentée et la seconde zone cannelée, avec la première roue dentée, il faut alors, pour que l'arbre de transmission puisse continuer à être enfilé, tourner d'un certain angle les deux roues dentées ou l'arbre de transmission et la première roue dentée jusqu'à ce que toutes les cannelures soient alignées. Ceci est délicat à réaliser par un seul monteur, mais deviendra encore plus délicat à la roue dentée suivante puisqu'il y aura alors trois roues dentées ou l'arbre de transmission et deux roues dentées à tourner, et ainsi de suite, d'autant plus qu'on ne sait pas si une ou plusieurs roues dentées ne sont pas en place, ni dans quel sens il faudrait les tourner, étant donné que celles-ci sont logées dans un carter fermé. On comprendra donc que ce montage pourra être difficilement réalisé industriellement. Cette même difficulté existera bien entendu également lors du démontage puis du remontage de l'arbre de transmission pendant une réparation, augmentant ainsi le temps d'immobilisation de la machine et les frais de main-d'œuvre.

La présente invention permet de remédier à l'ensemble de ces inconvénients dans la mesure où la faucheuse selon l'invention possède un arbre de transmission dont au moins les parties autres que les zones où ledit arbre de transmission est lié en rotation auxdits éléments et à ladite partie à profil complémentaire du profil de l'arbre de transmission, et qui doivent passer au travers desdits éléments lors du montage ou du démontage de l'arbre de transmission, ont une section transversale dont le profil est sensiblement semblable à celui de la section transversale desdites zones, mais de dimension nominale plus réduite, la différence entre les dimensions nominales des profils des sections transversales desdites zones et desdites parties étant telle que dans le cas du passage desdites parties, au niveau desdits éléments et de leur roue correspondante, lesdits éléments et leur roue conservent sensiblement leur position angulaire autour de l'arbre de transmission.

Ainsi, l'arbre de transmission d'une telle faucheuse peut être réalisé à un prix de revient très modique car lesdites parties autres que les zones où ledit arbre de transmission doit être lié à une roue d'entraînement, pourront être usinées chimiquement tel que par attaque acide par exemple.

Par ailleurs, le problème qui apparaissait lors du montage ou du démontage de l'arbre de transmission est supprimé puisqu'entre les zones destinées à être liées aux roues d'entraînement, lesdites roues d'entraînement ne peuvent plus tourner ou du moins que légèrement.

L'invention concerne également un procédé de fabrication d'un arbre de transmission d'une faucheuse de l'invention.

Dans le brevet FR-A-1 206 282, il est connu d'usiner des pièces en forme de longeron par voie chimique telle que par attaque acide par exemple, et de recouvrir d'un vernis inattaquable les zones qui ne doivent pas être usinées.

La présente invention prévoit d'utiliser une matière qui protège d'une part lesdites zones de l'arbre de transmission ne devant pas être usinées chimiquement, et qui empêche par la suite l'oxydation de contact entre ces zones et les roues d'entraînement qui y sont liées en rotation.

D'autres caractéristiques et avantages de la présente invention apparaîtront plus en détails dans les sous-revendications et dans la description suivante nullement limitative d'un exemple de réalisation de l'invention et en référence au dessin annexé sur lequel :

La figure 1 représente une vue en plan d'une faucheuse selon l'invention.

La figure 2 représente une vue en coupe de la faucheuse de la figure 1, suivant le plan vertical II-II.

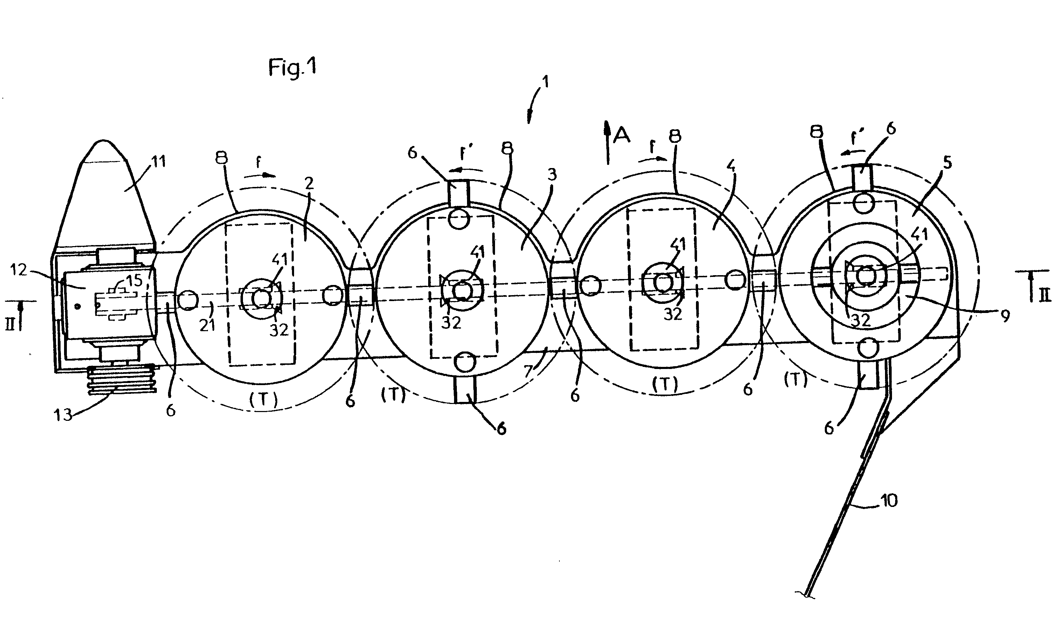

La faucheuse représentée sur la figure 1 comporte une barre de coupe (1) du type à disques (2, 3, 4, 5) entraînés par le bas. Chacun de ces disques (2, 3, 4, 5) est équipé de deux couteaux (6) diamétralement opposés et librement articulés autour de l'axe de leur dispositif de fixation, pour pouvoir se mettre en position de travail sous l'action de la force centrifuge lors de la rotation desdits disques (2, 3, 4, 5) dans le sens des flèches (f et f'). Les couteaux (6) décrivent alors des trajectoires (T) s'étendant à l'avant de la faucheuse vue dans son sens d'avancement (A), au-delà du bord avant du carter (7) de la barre de coupe (1). Ce bord avant comporte des secteurs circulaires (8) présentant un rayon supérieur à celui de la trajectoire décrite par les disques (2, 3, 4, 5), tout en étant inférieur au rayon de la trajectoire (T) décrite par les couteaux (6). Ainsi, ces secteurs (8) protègent les disques (2, 3, 4, 5) contre certains obstacles que peut rencontrer la barre de coupe (1) lors du travail, tandis que les couteaux (6), étant donné que chacun d'eux est librement articulé à son disque (2, 3, 4, 5), peuvent s'escamoter sous lesdits disques pour reprendre leur position de travail dès que l'obstacle est passé.

Un élément (9) en forme de tronc de cône par exemple, dont la fonction est de séparer le fourrage coupé de celui qui est encore sur pied, surmonte le disque (5) situé à l'extrémité libre de la barre de coupe (1). Cette extrémité est également pourvue d'une planche à andains (10) qui dévie le fourrage coupé par les disques (4, 5) vers celui coupé par les disques (2, 3).

L'autre extrémité de la barre de coupe (1) comporte un sabot (11) au-dessus duquel s'étend un carter de renvoi (12) qui sert à l'entraînement des organes de transmission logés dans le carter (7) en vue de l'entraînement en rotation des disques (2, 3, 4, 5). Le carter de renvoi (12) est actionné par une poulie à gorges (13), elle-même actionnée par une autre poulie à gorges et des courroies non représentées, la dernière desdites poulies à gorges pouvant être directement reliée à la prise de force d'un tracteur par un arbre à joints universels. Cette extrémité de la barre de coupe est également reliée à un châssis (non représenté) qui permet d'atteler la machine audit tracteur.

Sans sortir du cadre de l'invention, l'entraînement des organes de transmission logés dans le carter (7) peut également être réalisé à l'aide d'autres moyens tels par exemple qu'un arbre passant directement par l'un des disques (2, 3, 4, 5).

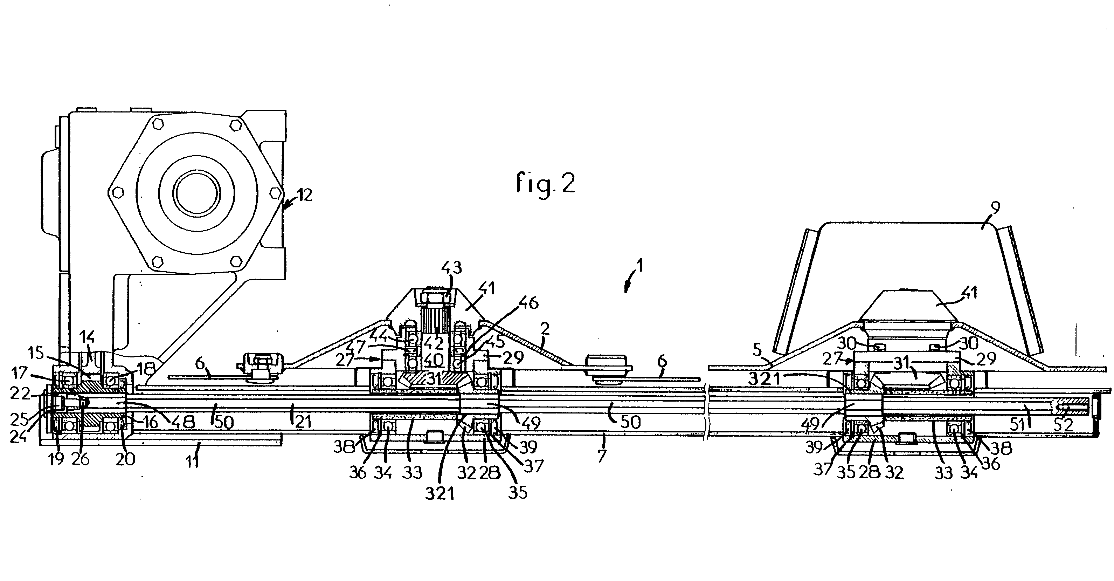

Le carter de renvoi (12) contient un certain nombre de roues dentées dont seuls la roue (14) et le pignon (15) sont visibles sur la figure 2. Le pignon (15) comporte une partie cylindrique (16) qui s'étend concentriquement de part et d'autre de sa denture et qui sert de portée aux roulements (17, 18) guidant en rotation ledit pignon (15). Le carter de renvoi (12) comporte également à sa base des joints d'étanchéité (19, 20) qui s'étendent entre les parois dudit carter de renvoi (12) et la partie cylindrique (16) afin de rendre ce carter de renvoi (12) étanche indépendamment de la présence de l'arbre de transmission (21).

La partie cylindrique (16) comporte un alésage (22) de section transversale hexagonale en vue de coopérer avec l'arbre de transmission (21) qui s'étend partiellement à l'intérieur dudit alésage (22) et comporte dans cette zone un profil hexagonal complémentaire du profil de l'alésage (22). L'arbre de transmission (21) s'étend au moins jusqu'au niveau du disque (5) et sert à l'entraînement des disques (2, 3, 4, 5) d'une manière qui sera décrite plus loin.

Afin de maintenir axialement l'arbre de transmission (21), l'ensemble pignon (15)-partie cylindrique (16) comporte un organe d'arrêt (24) qui est lié rigidement à cet ensemble ou tout au moins lié en translation par rapport à celui-ci. Une vis (25) dont la tête s'appuie sur l'organe d'arrêt (24) et dont la tige traverse ce dernier, est vissée dans un trou fileté (26) aménagé au bout de l'arbre de transmission (21).

En passant sous chaque disque (2, 3, 4, 5) l'arbre de transmission (21) traverse un boîtier (27) étanche indépendamment de la présence de cet arbre. Le boîtier (27) se compose d'un carter de boîtier (28) et d'un couvercle de boîtier (29) assemblés à l'aide des vis (30). A l'intérieur du boîtier (27) s'étend un couple conique (31, 32) qui transmet le mouvement de l'arbre de transmission (21) au disque (2, 3, 4, 5) correspondant. Le pignon (32) qui coopère avec l'arbre de transmission (21) est coaxialement et rigidement solidaire d'une douille (33) de telle manière que la liaison entre les deux soit étanche. La douille (33) et le pignon (32) peuvent également être réalisés en une seule pièce ou le pignon (32) peut être enfilé sur la douille (33) et lié en rotation à celle-ci au moyen de cannelures par exemple. L'ensemble pignon (32)-douille (33) est guidé en rotation et lié en translation dans le boîtier (27) grâce aux roulements (34, 35) et aux circlips (36, 37). Des joints d'étanchéité (38, 39) s'étendent entre le boîtier (27) et l'ensemble pignon (32)-douille (33).

Le pignon (31) est solidaire d'un arbre (40) qui est lié à la partie centrale (41) du disque (2, 3, 4, 5) correspondant grâce à des cannelures (42) et un écrou (43). L'arbre (40) est guidé en rotation et lié en translation dans le couvercle de boîtier (29) grâce aux roulements (44, 45) et au circlip (46). Un joint d'étanchéité (47) empêche la fuite du lubrifiant contenu dans le boîtier (27) par l'alésage du couvercle de boîtier (29).

Tout comme l'alésage (22) de l'ensemble pignon (15)-partie cylindrique (16), une partie de l'alésage (321) des ensembles pignon (32)-douille (33) comporte une section transversale hexagonale en vue de coopérer avec l'arbre de transmission (21).

Sur la figure 2, on voit que les zones (48, 49) de l'arbre de transmission (21) où celui-ci collabore respectivement avec le pignon (15) et les ensembles pignon (32)-douille (33), ont une dimension nominale supérieure à celle des parties (50) de cet arbre situées entre lesdites zones (48, 49). Ceci est également le cas de la partie (51) qui s'étend au-delà du disque (5).

Le fait de réduire la dimension nominale des parties (50) de l'arbre de transmission (21), qui ne collaborent pas directement avec le pignon (15) ou les ensembles pignon (32)-douille (33), permet en effet de retirer ledit arbre (21) des boîtiers (27) même si lesdites parties (50) sont oxydées ou si ledit arbre (21) est vrillé.

Selon l'invention, les parties (50, 51) ont avantageusement une section transversale sensiblement semblable à celle des zones (48, 49), c'est-à-dire hexagonale.

Avec cet agencement, l'arbre (21) peut être facilement monté puisque dans les parties (50) qui ont une forme sensiblement semblable à celle des zones (48, 49), mais de dimension nominale plus petite, les pignons (32) ne peuvent pas tourner. Ainsi, dès que la zone (48) aura pénétré dans un des pignons (32), la rotation relative de celui-ci par rapport à l'arbre (21) sera sensiblement condamnée.

De plus, l'arbre de transmission (21) peut être fabriqué sans usinage mécanique, ni pour réaliser une liaison en rotation entre ledit arbre de transmission (21) et le pignon (15) ou les ensembles pignon (32)-douille (33), telle qu'une rainure de clavette ou des cannelures par exemple, ni pour réduire la dimension nominale des parties (50, 51). Les seuls usinages mécaniques qui ont été réalisés sur l'arbre de transmission (21) sont les trous filetés (26, 52) dont l'un sert à la fixation axiale de l'arbre tel que décrit plus haut et l'autre au démontage de cet arbre, en tirant sur une tige filetée vissée dans ledit trou (52).

En effet, pour réaliser l'arbre de transmission (21), il suffit de partir d'une barre de section hexagonale dont la dimension nominale est égale à celle que doivent avoir les zones (48, 49) pour pouvoir coopérer avec le pignon (15) et les ensembles pignon (32)-douille (33), puis de protéger les endroits de ladite barre où ces zones (48, 49) doivent s'étendre, à l'aide d'un vernis par exemple, et enfin de plonger la barre ainsi préparée dans un bain d'acide le temps nécessaire pour obtenir la dimension nominale souhaitée de la section transversale des parties (50, 51).

La différence entre la dimension nominale des sections transversales des zones (48, 49) et des parties (50, 51) est au moins égale à 0,2 millimètre et de préférence 0,5 millimètre.

Pour cette attaque chimique, les paramètres tels que nature du bain acide et concentration peuvent être choisis de telle manière que le raccord entre les zones (48, 49) et les parties (50, 51) de l'arbre de transmission (21) soit sensiblement arrondi, ce qui est avantageux pour cet arbre qui travaille essentiellement à la torsion.

Les zones (48, 49) de l'arbre de transmission (21) peuvent être avantageusement recouvertes d'une matière qui empêche l'oxydation de contact entre ces zones (48, 49) et les pignons (15, 32). Dans ce cas, l'alésage du pignon (15) et des ensembles pignon (32)-douille (33) aura une dimension telle que ledit alésage puisse collaborer avec les zones (48, 49) ainsi recouvertes de ladite matière. Ce rôle pourra être avantageusement réalisé par un vernis de protection qui protège également les zones (48, 49) lors de l'usinage chimique dudit arbre de transmission (21).

Dans l'exemple de réalisation de la figure 2, les zones (49) ont une longueur sensiblement identique à celle des pignons (32) et coopèrent directement avec ces derniers. Il est bien évident que l'on ne sortira pas du cadre de l'invention si lesdites zones (49) coopèrent uniquement avec les douilles (33) ou si la longueur de ces zones est sensiblement égale à la longueur des ensembles pignon (32)-douille (33).

Il est également évident que l'arbre de transmission (21) peut être réalisé en plusieurs pièces qui peuvent être reliées entre elles. Dans ce cas, les zones (49) seront partagées chacune en deux, chaque moitié faisant partie de deux bouts d'arbre voisins. Avec un tel mode de réalisation de l'arbre de transmission (21), il est préférable que la transmission de la puissance d'un bout d'arbre au bout d'arbre suivant soit réalisée par la douille (33) et non par le pignon (32), ce qui permet d'avoir des pignons (32) de dimensions relativement réduites.

Il est d'autre part évident que la section de l'arbre de transmission (21) n'est nullement limitée à une forme hexagonale, mais peut avoir n'importe quelle forme de polygone droit ou curviligne.

Par ailleurs, dans cet exemple de réalisation les roues (31, 32) qui transmettent le mouvement de rotation de l'arbre (21) au disque (2, 3, 4, 5) correspondant, sont des roues coniques. Il est évident que cette transmission du mouvement pourra également être réalisée au moyen d'une roue et d'une vis sans fin, d'engrenages gauches, d'engrenages hypoïdes, etc...

Il est également évident que la partie (51) ne doit pas nécessairement avoir une dimension nominale plus petite que la dimension nominale des zones (48, 49) puisque dans l'exemple représenté sur la figure 2, la partie (51) ne passe pas au travers des pignons (15 ou 32), lors du montage ou du démontage de l'arbre de transmission (21). La réduction de la dimension nominale de la partie (51) est uniquement dictée par le fait qu'il n'y a pas lieu d'utiliser du vernis à un endroit où cela n'est pas nécessaire.

La partie (51) sert uniquement à faciliter le vissage d'une tige filetée dans le trou (52) pendant l'opération de démontage. Il est d'ailleurs parfaitement possible que l'arbre (21) puisse être dépourvu d'une telle partie (51). Dans ce cas, la tige filetée qui sert au démontage de l'arbre (21) doit avoir une longueur adéquate pour permettre ledit démontage.

**Revendications**

1. Faucheuse comportant un ou plusieurs organes rotatifs (2, 3, 4, 5) munis d'au moins un outil de coupe (6) et liés en rotation à des arbres (40) dirigés vers le haut, une partie au moins desdits organes rotatifs (2, 3, 4, 5) étant liés en rotation à un arbre de transmission (21) au moyen de couples de roues d'entraînement (31, 32) dont une roue (32) est munie d'un élément (321) comportant un profil complémentaire du profil de l'arbre de transmission (21), et qui transmettent ainsi le mouvement entre l'arbre de transmission (21) et les arbres (40) dirigés vers le haut correspondants, ledit arbre de transmission (21) s'étendant sous les organes rotatifs (2, 3, 4, 5) et étant entraîné par un organe d'entraînement tel qu'un ensemble roue-pignon (14, 15) par exemple, ledit ensemble ayant également une partie (22) à profil complémentaire du profil de l'arbre de transmission (21), caractérisée par le fait qu'au moins les parties (50) dudit arbre de transmission (21) autres que les zones (48, 49) où cet arbre de transmission (21) est lié en rotation auxdits éléments (321) et à la partie (22), et qui doivent passer au travers desdits éléments (321) lors du montage ou du démontage de l'arbre de transmission (21), ont une section transversale dont le profil est sensiblement semblable à celui de la section transversale desdites zones (48, 49), mais de dimension nominale plus réduite, la différence entre les dimensions nominales des profils des sections transversales des zones (48, 49) et des parties (50) étant telle que dans le cas du passage des parties (50) au niveau des éléments (321) et de leur roue (32) correspondante, lesdits éléments (321) et leur roue (32) conservent sensiblement leur position angulaire autour de l'arbre de transmission (21).

2. Faucheuse selon la revendication 1, caractérisée par le fait que la différence entre les dimensions nominales des profils des sections transversales des zones (48, 49) et des parties (50) est au moins égale à 0,2 millimètre.

3. Faucheuse selon la revendication 2, caractérisée par le fait que la différence entre les dimensions nominales des profils des sections transversales des zones (48, 49) et des parties (50) est égale à 0,5 millimètre.

4. Faucheuse selon la revendication 1, 2 ou 3, caractérisée par le fait que les zones (48, 49) sont recouvertes d'une matière qui empêche l'oxydation de contact entre ces zones (48, 49) et les roues d'entraînement (15, 32).

5. Procédé de réalisation d'un arbre de transmission (21) d'une faucheuse selon la revendication 4, caractérisé par le fait que l'usinage dudit arbre de transmission est fait chimiquement et que la matière qui protège, lors de l'usinage chimique, les zones (48, 49) où cet arbre de transmission est destiné à être lié à une roue d'entraînement (15, 32), empêche par la suite d'oxydation de contact entre ces zones (48, 49) et lesdites roues d'entraînement (15, 32).

**Claims**

1. Mower with one or several rotary devices (2, 3, 4, 5) provided with at least one cutting tool (6) and fixed in rotation to upwardly directed shafts (40), at least one part of said rotary devices (2, 3, 4, 5) being connected in rotation to a driving shaft (21) by means of driving wheels (31, 32), one wheel (32) of which is provided with an element (321) which involves a complementary profile of the profile of the driving shaft (21), said wheels transmit in this way the movement between the driving shaft (21) and the corresponding upwardly directed shafts (40), said driving shaft (21) extending under the rotary devices (2, 3, 4, 5) and being driven by a driving device such as a wheel (14) and a pinion (15) for exemple, this driving device having also a part (22) with a complementary profile of the profile of the driving shaft (21), characterized by the fact that at least the parts (50) of said driving shaft (21) other than the areas (48, 49) where this driving shaft (21) is connected in rotation to the said elements (321) and to the part (22) and which have to go through these elements (321) during the assembling or the disassembling of the driving shaft (21), have a cross-section the profile of which is substantially similar to the profile of the cross-section of the areas (48, 49) but of a lower nominal dimension, the difference between the nominal dimensions of the profiles of the cross-sections of the areas (48, 49) and of the parts (50) being such that during the passage of the parts (50) through the elements (321) and their corresponding wheel (32), these elements (321) and their wheel (32) will substantially keep their angular position around the driving wheel (21).

2. Mower as claimed in claim 1, wherein the difference between the nominal dimensions of the profiles of the cross-sections of the areas (48, 49) and of the parts (50) is at least equal to 0,2 millimetre.

3. Mower as claimed in claim 2, wherein the difference between the nominal dimensions of the profiles of the cross-sections of the areas (48, 49) and of the parts (50) is equal to 0,5 millimetre.

4. Mower as claimed in claim 1, 2 or 3, wherein the areas (48, 49) are covered with a substance which avoids the contact oxidation between these areas (48, 49) and the driving wheels (15, 32).

5. Realization process of a driving shaft (21) of a mower as claimed in claim 4, wherein the manufacturing of this driving shaft is made chemically and the substance which protects during the chemical manufacturing the areas (48, 49) where this driving shaft is intended to be connected to a driving wheel (15, 32), hinders later the contact oxidation between these areas (48, 49) and the said driving wheels (15, 32).

**Patentansprüche**

1. Mähmaschine mit einem oder mehreren Drehorganen (2, 3, 4, 5) die mindestens mit einem Schneidwerkzeug (6) versehen sind und die drehbar mit stehend angeordneten Wellen (40) verbunden sind, mindestens ein Teil diesen Drehorganen (2, 3, 4, 5) ist drehbar mit einer Gelenkwelle (21) mittels Zahnräder (31, 32) verbunden, die somit den Antrieb zwischen der Gelenkwelle (21) und den entsprechenden stehend angeordneten Wellen (40) übertragen, wovon ein Rad (32) ein Element (321) aufweist, das ein Ergänzungsprofil des Profiles der Gelenkwelle (21) aufweist, welche Gelenkwelle (21) sich unter den Drehorganen (2, 3, 4, 5) erstreckt und die von einem Antriebsorgan aufgetrieben wird, wie zum Beispiel eine Einheit Rad-Treibrad (14, 15), welche Einheit auch ein Teil (22) aufweist, das ein Ergänzungsprofil des Profiles der Gelenkwelle (21) aufweist, dadurch gekennzeichnet, dass wenigstens die Teile (50) dieser Gelenkwelle (21) anders als die Bereiche (48, 49) wo diese Welle (21) drehbar mit den Elementen (321) und mit dem Teil (22) verbunden ist, und die während der Montage oder der Demontage der Gelenkwelle (21) durch diese Elementen (321) gehen sollen, ein Querschnitt haben, dessen Profil etwa ähnlich dem Profil des Querschnitts dieser Bereiche (48, 49) ist, aber mit einer kleineren Nennabmessung, der Unterschied zwischen den Nennabmessungen der Profile der Querschnitte der Bereiche (48, 49) und der Teile (50) ist so, dass während des Durchgangs der Teile (50) durch die Elemente (321) und deren entsprechenden Rädern (32), diese Elemente (321) und deren Räder (32) etwa ihre winkelige Lage gegenüber der Gelenkwelle (21) behalten.

2. Mähmaschine nach Anspruch 1, dadurch gekennzeichnet, dass der Unterschied zwischen den Nennabmessungen der Profile der Querschnitte der Bereiche (48, 49) und der Teile (50) mindestens 0,2 Millimeter gross ist.

3. Mähmaschine nach Anspruch 2, dadurch gekennzeichnet, dass der Unterschied zwischen den Nennabmessungen der Profile der Querschnitte der Bereiche (48, 49) und der Teile (50) 0,5 Millimeter gross ist.

4. Mähmaschine nach Anspruch 1, 2 oder 3, dadurch gekennzeichnet, dass die Bereiche (48, 49) mit einer Substanz bedeckt sind, die die Kontaktoxydation zwischen diesen Bereichen (48, 49) und den Treibrädern (15, 32) verhütet.

5. Verfahren zur Herstellung der Gelenkwelle (21) einer Mähmaschine nach Anspruch 4, dadurch gekennzeichnet, dass die Bearbeitung dieser Gelenkwelle chemischerweise durchgeführt wird, und dass die Substanz, die die Bereiche (48, 49) wo diese Gelenkwelle an ein Treibrad (15, 32) verbunden werden soll während der chemische Bearbeitung schützt, später die Kontaktoxydation zwischen diesen Bereichen (48, 49) und diesen Treibrädern (15, 32) verhütet.

Fig.1

0 086 171

fig. 2